# FASCICULE DE BREVET EUROPEEN

(11) **EP 2 670 558 B1**
(45) Date de publication et mention de la délivrance du brevet: **15.05.2019**
(21) Numéro de dépôt: 12708561.1
(22) Date de dépôt: 31.01.2012
(51) Int. Cl.: B23K 31/02, B23K 33/00, E04H 7/02, G21C 19/07

(54) **RÉALISATION D'UN CUVELAGE POUR PISCINE, BÂCHE OU ENCEINTE DE CONFINEMENT AMELIORÉ**
VERFAHREN ZUR HERSTELLUNG EINES VERBESSERTEN FUTTERS FÜR EIN BECKEN, EINEN TANK ODER EINEN SICHERHEITSBEHÄLTER
METHOD OF MAKING AN IMPROVED LINER FOR A POOL, A TANK OR A CONTAINMENT ENCLOSURE

(30) Priorité: 02.02.2011 FR 1100326
(43) Date de publication de la demande: 11.12.2013
(73) Titulaire: Constructions Mécaniques Consultants, 38410 Vaulnaveys le Haut (FR)
(72) Inventeur: SIMON, Jean, F-38410 Vaulnaveys le Haut (FR); PÉTREQUIN, Michel, F-38160 Izeron (FR)
(74) Mandataire: Talbot, Alexandre
(86) Numéro de dépôt international: PCT/FR2012/000041
(87) Numéro de publication internationale: WO 2012/104506

(56) Documents cités:
- EP-A1- 0 010 053
- EP-A1- 0 191 672
- WO-A2-2008/152220

## Description

### Domaine technique de l'invention

L'invention est relative à un procédé de réalisation d'un cuvelage pour piscine, bâche ou enceinte de confinement, en particulier d'une enceinte de confinement d'une centrale nucléaire.

### État de la technique

Le cuvelage d'une piscine, d'une enceinte ou d'une bâche de confinement est constitué par un revêtement métallique intérieur rapporté sur un ouvrage en béton, de manière à confiner les effluents et à garantir l'étanchéité de la piscine en fonctionnement normal ou accidentel. Le revêtement métallique est constitué de tôles soudées les unes aux autres.

Habituellement, la soudure est réalisée par une technique de soudure employant une latte disposée à l'arrière des tôles, au niveau de la zone à souder. Une telle technique n'est, cependant, pas mise en oeuvre à l'heure actuelle car l'étanchéité ne peut pas être assurée à 100%. En effet, la soudure réalisée sur latte est difficile à contrôler. Elle ne peut donc pas être garantie. De plus, elle peut présenter des défauts rémanents provoqués par des inclusions, des oxydations créées pendant la soudure et provoquant des amorces de rupture. Or, ces amorces de rupture peuvent remettre en cause la tenue mécanique du revêtement soumis à des sollicitations telles que des variations de pression et de température ou des vibrations, par exemple, dues à un séisme. En effet, avec cette technique de soudure sur latte, l'étanchéité du revêtement dépend de la zone de soudure qui est en contact, par l'intermédiaire de la latte, à l'élément d'ancrage. Un défaut d'étanchéité met, alors, en péril la tenue mécanique de l'ancrage et donc du cuvelage.

Pour répondre à ce problème, certains ont proposé de réaliser un ou plusieurs canaux de récupération d'égouttures en cas de fuite, entre la paroi en béton et les tôles.

À titre d'exemple, la demande de brevet EP-0191672 propose, ainsi, d'employer des poutres comprenant chacune deux profilés ayant une section transversale en forme de U et ménageant une surface d'appui pour les tôles au niveau du cordon de soudure, un canal de visite et deux canaux de drainage.

Cependant, même avec un canal de récupération des égouttures, le risque de perte d'étanchéité demeure, car il peut y avoir des fuites par capillarité. De plus, ces systèmes ne garantissent pas une bonne interprétation de la soudure entre deux tôles, ni la prévention des risques de rupture de la soudure.

La Demanderesse a proposé, dans la demande de brevet WO-A-2008/152220, un procédé de réalisation d'un cuvelage permettant de garantir l'étanchéité des soudures réalisées, ainsi que la tenue mécanique du cuvelage. En particulier, elle propose de placer, au droit de la zone à souder entre deux tôles adjacentes, un rail délimitant avec les deux tôles adjacentes un espace de contrôle permettant de rendre le cordon de soudure visible. De plus, les éléments assurant la tenue mécanique du cuvelage sont indépendants des éléments assurant l'étanchéité dudit cuvelage.

### Objet de l'invention

L'objet de l'invention est de proposer un perfectionnement au procédé de réalisation d'un cuvelage pour piscine, bâche ou enceinte de confinement ayant fait l'objet de la demande de brevet WO-A-2008/152220 déposée par la Demanderesse.

Ce but est atteint par un procédé de réalisation d'un cuvelage pour piscine, bâche ou enceinte de confinement, comportant :
- le montage d'une série de tôles adjacentes incluant au moins :
   a) la fixation d'une tôle monolithique à au moins une plaque d'ancrage disposée en regard, la tôle monolithique étant partiellement délardée de manière à former une partie amincie pour permettre, dans sa partie amincie, sa soudure avec au moins une tôle dépourvue d'éléments d'ancrage et, dans sa partie non amincie, la fixation mécanique de ladite tôle monolithique à la plaque d'ancrage,
   b) et la mise en place d'un rail délimitant avec les tôles adjacentes et au droit de la zone à souder, un espace de contrôle du cordon de soudure,
- et la soudure des tôles les unes aux autres pour former une partie d'une surface du cuvelage en réalisant un cordon de soudure, ladite soudure étant une soudure bout à bout pleinement pénétrée.

Selon un mode de réalisation préférentiel, la tôle dépourvue d'éléments d'ancrage présente une épaisseur uniforme, égale à l'épaisseur de la partie amincie de la tôle monolithique. Elle est, de plus, avantageusement, disposée entre deux tôles monolithiques et la tôle monolithique est, en particulier, fixée à plusieurs plaques d'ancrage, de préférence alignées selon un axe de direction parallèle à l'axe longitudinal de la tôle monolithique.

Un tel procédé de réalisation d'un cuvelage permet de conserver la garantie d'étanchéité des soudures réalisées ainsi que la tenue mécanique du cuvelage, apportées par le procédé décrit dans la demande de brevet WO-A-2008/152220, tout en améliorant la mise en oeuvre et en réduisant les coûts de réalisation.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
- La figure 1 illustre une vue de dessus d'un mode particulier de réalisation d'un cuvelage selon l'invention.
- La figure 2 est une vue en coupe selon l'axe A-A de la figure 1 et la figure 3 est un agrandissement de la partie délimitée par le cadre en pointillés sur la figure 2.
- La figure 4 est une vue en coupe d'une alternative du mode particulier de réalisation selon les figures 1 à 3.
- Les figures 5 et 6 représentent, en coupe, deux autres modes de réalisation d'un cuvelage.

### Description d'un mode préférentiel de l'invention

Le cuvelage d'une piscine, d'une bâche ou d'une enceinte de confinement est réalisé en montant successivement et côte à côte des séries de tôles adjacentes et en soudant lesdites tôles, de manière à revêtir l'ensemble des parois en béton de ladite piscine.

De plus, les tôles adjacentes sont soudées par une soudure ou un cordon de soudure bout à bout (ou bord à bord) pleinement pénétré. Par soudure bout à bout pleinement pénétrée, on entend, la réalisation d'un cordon de soudure réunissant les bords de deux tôles adjacentes, les deux bords étant en général, séparés l'un de l'autre par un intervalle prédéterminé que le cordon de soudure vient pleinement combler. Ceci permet d'obtenir un cordon de soudure sans défaut de jonction et sans risque de rupture fragile.

De plus, un rail est mis en place au droit de la zone à souder. Un tel rail délimite, en particulier, avec les tôles adjacentes à souder un espace de contrôle du cordon de soudure. En particulier, une fois le cordon de soudure réalisé, celui-ci peut être contrôlé selon les tests ci-dessous :
- un test de ressuage,
- un test de contrôle par rayons X
- des tests de contrôle visuel,
- et des tests d'étanchéité, notamment un test de contrôle d'étanchéité réalisé à l'aide d'une boîte permettant de faire le vide au niveau de la zone soudée, également appelé « boîte à vide ».
Si l'un des contrôles réalisés est négatif, les étapes de soudure et de contrôle peuvent être réitérées de manière à obtenir une soudure avec un coefficient de soudure proche de 1.

Il est aussi proposé de réaliser au moins une partie de la surface du cuvelage en se passant d'éléments d'ancrage pour certaines tôles. Ainsi, ces tôles, appelées dans la suite de la description tôles dépourvues d'éléments d'ancrage, ne sont pas fixées à une paroi en béton par l'intermédiaire d'éléments d'ancrage et/ou de plaques d'ancrage. Leur tenue mécanique à une paroi en béton de la piscine est assurée par la ou les tôles adjacentes auxquelles elles sont soudées. Elles sont, plus particulièrement, formées par des tôles d'épaisseur uniforme et les deux faces opposées les constituant sont libres.

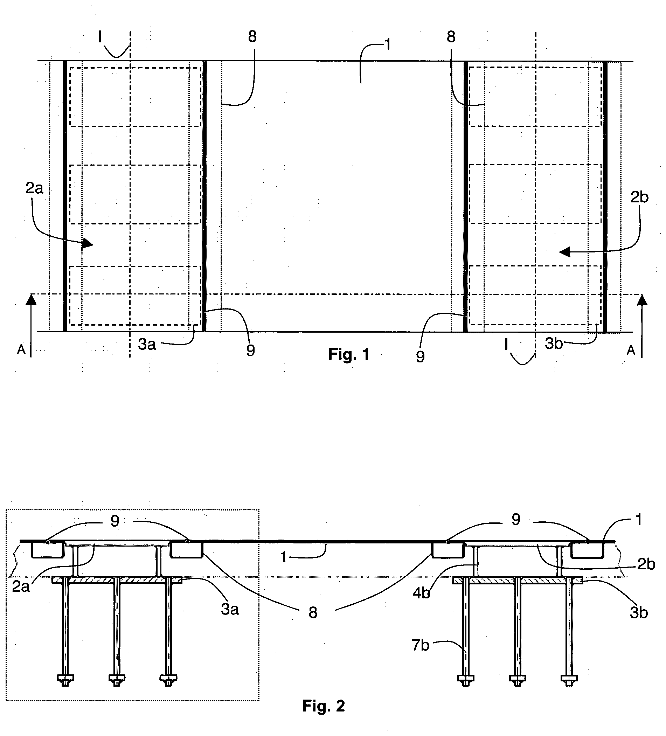

Les figures 1 à 3 illustrent un premier mode particulier de réalisation d'une série de tôles soudées les unes aux autres pour former une partie d'une surface d'un cuvelage.

En particulier, sur les figures 1 à 3, une tôle dépourvue d'éléments d'ancrage 1, d'une épaisseur uniforme, est disposée entre deux tôles particulières 2a et 2b, appelée tôles monolithiques.

Pour des raisons de clarté, lorsque la description ci-dessous s'applique indifféremment aux deux tôles monolithiques 2a, 2b ainsi qu'à leurs éléments constitutifs ou associés, les indices « a » et « b » pourront être omis. À titre d'exemple, les tôles monolithiques 2a, 2b et toutes tôles monolithiques additionnelles seront référencées 2.

Ainsi, chaque tôle monolithique 2 est préalablement fixée à au moins une plaque d'ancrage 3 disposée en regard de ladite tôle monolithique et destinée à assurer la tenue mécanique de l'ensemble. Par plaque d'ancrage, on entend une plaque constituée par des éléments de structure délimités par deux plans parallèles et de faible épaisseur par rapport à ses deux autres dimensions, servant d'ancrage mécanique pour la tôle à laquelle elle est fixée.

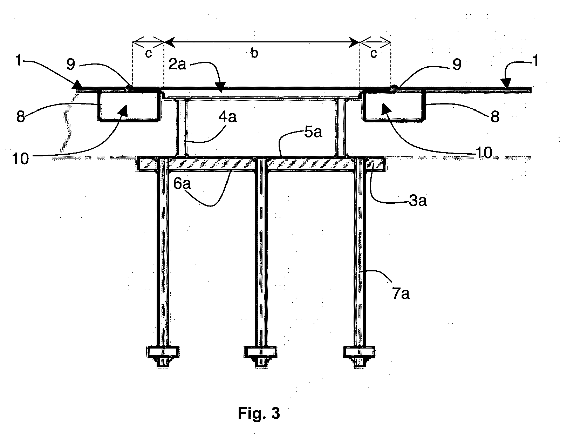

Chaque tôle monolithique 2 est, de plus, partiellement délardée. Ceci permet d'obtenir une tôle comportant :
- une partie amincie en périphérie (notée c sur la figure 3), dont l'épaisseur est égale à celle de la tôle dépourvue d'éléments d'ancrage 1, afin de permettre la réalisation de la soudure
- et une partie principale non amincie (notée b sur la figure 3), dont l'épaisseur est supérieure à celle de la tôle dépourvue d'éléments d'ancrage 1, afin d'assurer la fixation mécanique de la tôle à au moins une plaque d'ancrage, ainsi que la tenue mécanique de l'ensemble des tôles soudées.

Selon un mode avantageux, chaque tôle monolithique 2 est fixée à plusieurs plaques d'ancrage 3. En particulier, la fixation mécanique de la tôle monolithique 2 à chaque plaque d'ancrage 3 est, avantageusement, réalisée par l'intermédiaire d'au moins un élément d'ancrage 4. Cet élément d'ancrage 4 est disposé en saillie de la partie principale non amincie b de la tôle monolithique 2, en direction d'une première face 5 de la plaque d'ancrage 3 (notée 5a et 5b respectivement pour les plaques 3a et 3b) à laquelle il est rendu solidaire. De plus, la plaque d'ancrage 3 comporte une seconde face 6 (notée 6a ou 6b respectivement pour la plaque d'ancrage 3a ou 3b), opposée à la première face 5 et munie d'éléments de fixation 7 (notés 7a ou 7b respectivement pour la plaque d'ancrage 3a ou 3b) faisant saillie pour visser la plaque d'ancrage à une paroi en béton (non représentée). Sur les figures 1 à 3, la tôle monolithique 2 est fixée à une plaque d'ancrage 3 par l'intermédiaire de deux éléments d'ancrage 4 comprenant chacun une extrémité soudée à la partie non amincie b de la tôle monolithique et une extrémité soudée à la première face 5 de la plaque d'ancrage 3.

De plus, sur les figures 1 à 3, chacune des deux tôles monolithiques 2 est, par exemple, fixée à trois plaques d'ancrage 3 identiques, avantageusement coplanaires et alignées. Par plaques d'ancrage alignées, on entend des plaques d'ancrage mises en ligne selon un axe de direction parallèle à l'axe longitudinal (noté I sur la figure 1) de la tôle monolithique 2 à laquelle elles sont associées. Chaque tôle monolithique 2 présente aussi, avantageusement, une largeur supérieure à celle des plaques d'ancrage 3 auxquelles elle est fixée afin de les couvrir. Enfin, les tôles monolithiques 2a et 2b sont, sur les figures 1 à 3, disposées dans un même plan sensiblement parallèle à celui contenant les plaques d'ancrage 3a et 3b, avec un écart prédéterminé ajustable entre les deux plans.

Une fois les tôles monolithiques 2 fixées aux plaques d'ancrage 3, un rail 8 est mis en place, au droit de chaque zone à souder. Chaque rail 8 est, plus particulièrement, disposé en périphérie de chaque tôle monolithique 2, au niveau de leur partie amincie c.

Ainsi, quatre rails 8, ayant une section en forme de U, sont illustrés sur les figures 1 et 2. Ils sont, chacun, disposés entre une tôle monolithique 2 et une tôle adjacente dépourvue d'élément d'ancrage 1, au droit du cordon de soudure 9. De tels rails 8 délimitent, en particulier, avec les tôles adjacentes à souder, des espaces de contrôle 10 des cordons de soudure 9. Ainsi, il est possible de contrôler les cordons de soudure 9 par l'intermédiaire de ces espaces de contrôle 10, notamment par contrôle par rayons X, tel que décrit dans la demande de brevet WO-A-2008/152220.

Les rails 8 peuvent également, comme décrit dans la demande de brevet WO-A-2008/152220, recevoir un traînard mobile, suivant le mouvement de l'appareil à souder afin de permettre la formation d'une zone ou d'une atmosphère de gaz inerte, au niveau de la zone à souder pendant la réalisation de la soudure. De plus, ils peuvent aussi être utilisés comme goulottes de récupération d'égoutture au droit des cordons de soudure 9, ce qui représente une sécurité supplémentaire garantissant la fiabilité de l'étanchéité du cuvelage.

L'opération de soudure est réalisée, une fois les tôles dépourvues d'éléments d'ancrage 1 mises en place, pour former une partie d'une surface du cuvelage. Cette opération de soudure permet, ainsi, de former les cordons de soudure 9 qui sont des soudures bout à bout pleinement pénétrées. De plus, dans ce mode particulier de réalisation elles sont directement visibles depuis les espaces de contrôle 10.

Un tel procédé de réalisation permet, ainsi, d'obtenir une jonction entre des tôles adjacentes par une soudure bout à bout pleinement pénétrée, répondant aux critères suivants :
- 100% sur toute la longueur du ou des cordons de soudure (ou joint) lors du test de contrôle visuel
- 100% sur toute la longueur du ou des cordons de soudure lors du test de ressuage
- 100% sur toute la longueur du ou des cordons de soudure lors du test de contrôle par rayons X
- 100% sur toute la longueur du ou des cordons de soudure lors du test de contrôle d'étanchéité.
L'ensemble des tests ci-dessus permet, ainsi, de garantir la qualité du joint en équivalence avec les tôles. Ainsi, ces tests garantissent que le ou les cordons de soudure ont les caractéristiques mécaniques des tôles. De ce fait, le joint est conforme aux codes de calcul utilisés de manière courante dans le domaine technique de la fabrication d'enceintes de confinement d'une centrale nucléaire, ce qui garantit la pérennité du cuvelage (Cyclage thermique, séisme,...).

De plus, le fait que les éléments d'ancrage 4 des tôles monolithiques 2 soient totalement indépendants des cordons de soudure 9 présente l'avantage de dissocier la fonction de résistance mécanique de la fonction d'étanchéité.

Enfin, le fait d'utiliser des tôles dépourvues d'éléments d'ancrage soudées à au moins une tôle monolithique partiellement délardée permet d'améliorer la mise en oeuvre du procédé de réalisation du cuvelage et de diminuer son coût de fabrication. En effet, cela permet de réduire le nombre d'opération liées à la fixation des tôles à des plaques d'ancrage.

De plus, la mise en oeuvre du procédé et le coût de fabrication du cuvelage peuvent être encore optimisés en amenant avantageusement, sur le site de réalisation, des tôles dépourvues d'éléments d'ancrage 1 standardisées. Ces tôles standardisées présentent, alors, des dimensions standards (normalisées) et elles sont découpées sur site, pendant le montage de la série de tôles adjacentes, afin d'ajuster leurs dimensions aux besoins du cuvelage. Plus particulièrement, les dimensions de la tôle standard sont ajustées en fonction de l'espace nécessaire (requis) pour la mise en place de la tôle dépourvue d'éléments d'ancrage 1. Cet espace correspond, souvent, à l'espace vide séparant les deux tôles entre lesquelles la tôle standard doit être disposée. Il est à noter que l'estimation de l'espace nécessaire pour la tôle dépourvue d'éléments d'ancrage, entre ces deux tôles, doit prendre en considération le fait qu'un écart doit être nécessairement conservé entre deux tôles adjacentes pour la réalisation du cordon de soudure. De plus, la tôle dépourvue d'éléments d'ancrage peut être disposée entre deux tôles monolithiques partiellement délardées comme représenté sur les figures 1 à 3 ou bien entre une tôle monolithique partiellement délardée et une autre tôle quelconque (par exemple une autre tôle avec ou sans éléments d'ancrage).

Enfin, le fait d'utiliser, dans un mode avantageux, une tôle monolithique pour plusieurs plaques d'ancrage alignées permet aussi de faciliter la mise en oeuvre du procédé et de réduire ses coûts de réalisation, en diminuant le nombre de cordons de soudure à réaliser.

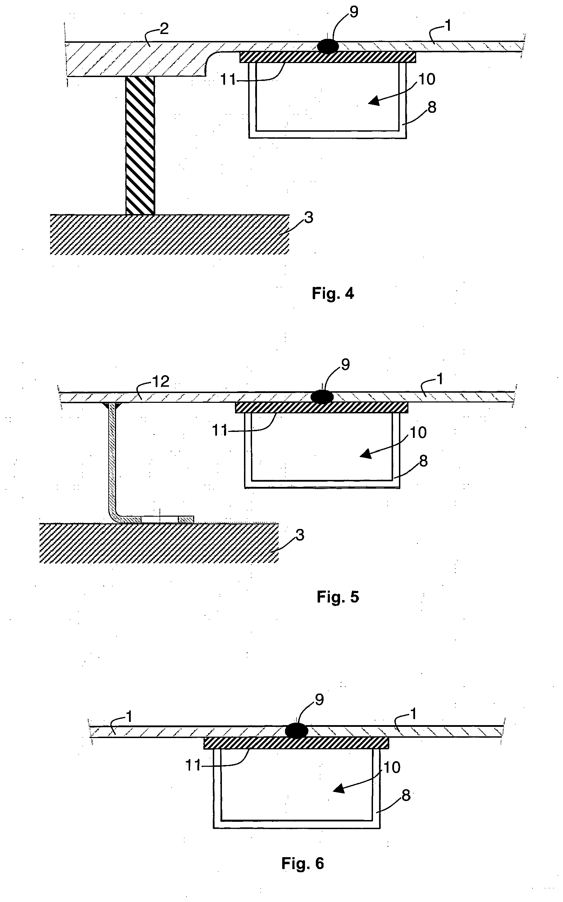

Selon une alternative représentée à la figure 4, un tel procédé de réalisation autorise également un soudage utilisant une latte métallique. Celle-ci peut, en effet, être utile pour souder des tôles adjacentes présentant un point d'inflexion au niveau de la zone à souder. La latte métallique, placée à ce point d'inflexion, permet, ainsi, d'éviter les sollicitations en flexion de la soudure. Plus particulièrement, une latte métallique 11 est placée contre les deux tôles adjacentes à souder, au droit de la zone à souder.

Sur la figure 4, les deux tôles adjacentes à souder sont, respectivement :
- une tôle monolithique 2 telle que décrite précédemment, partiellement délardée et fixée mécaniquement à au moins une plaque d'ancrage 3
- et une tôle dépourvue d'élément d'ancrage 1, d'une épaisseur uniforme.

La latte métallique 11 est placée contre les faces arrière des deux tôles 1 et 2, au niveau de la zone à souder 2. Chacune des faces arrière des deux tôles est la face qui est opposée à la face avant par laquelle est réalisée la soudure. La face arrière de la tôle monolithique 2 correspond également à la face dans laquelle est réalisé le délardage, tandis que la face avant de la tôle monolithique 2 reste avantageusement plane.

Le rail 8 est ensuite mis en simple appui contre la latte 11, sans être fixé mécaniquement à celle-ci. Ainsi, il n'y a pas de soudure ou une autre fixation destinée à rendre le rail 8 solidaire mécaniquement de la latte 11. La latte 11 et le rail 8 sont simplement mis en contact.

Dans ce cas, l'espace de contrôle 10 pour le cordon de soudure 9 est plus particulièrement délimité par le rail 8 et la latte 11, ce qui permet toujours un contrôle du cordon de soudure 9, notamment par rayons X, même si dans ce cas spécifique, le cordon de soudure 9 n'est pas directement visible depuis l'espace de contrôle 10.

Avantageusement, la latte métallique 11 est constituée par le même matériau que celui constituant les tôles 1 et 2. De plus, elle présente, de préférence, une épaisseur supérieure ou égale à l'épaisseur de la tôle 1 et de la partie amincie de la tôle monolithique 2.

Lorsque la soudure est réalisée, le cordon de soudure 9 est formé entre les deux tôles adjacentes 2 et 1, par fusion non seulement d'une partie de chacune des tôles 1 et 2, mais aussi d'une partie de la latte métallique 11. Ceci rend la latte métallique 11 solidaire des deux tôles 1 et 2 contre lesquelles elle a été placée. Il s'agit également ici d'une soudure bout à bout pleinement pénétrée, dans la mesure où il y a une fusion sur toute l'épaisseur des tôles adjacentes 1 et 2.

Comme illustré sur les figures 5 et 6, le soudage de certaines tôles adjacentes pour former une partie d'une surface du cuvelage peut aussi être réalisé en utilisant une latte métallique mise en place contre deux tôles adjacentes, chacune d'épaisseur uniforme. Dans ce cas, un rail 8 est toujours mis en place pour délimiter avec les tôles adjacentes et au droit de la zone à souder un espace de contrôle 10 pour le cordon de soudure 9. De plus, au moins une des deux tôles à souder présente l'avantage d'être dépourvue d'élément d'ancrage. Elle n'est, ainsi, pas fixée à une paroi en béton par l'intermédiaire d'éléments d'ancrage et/ou de plaques d'ancrage.

Sur la figure 5, une des deux tôles à souder (notée 12 sur la figure 5) est fixée mécaniquement à une plaque d'ancrage, tandis que l'autre tôle est une tôle dépourvue d'éléments d'ancrage 1.

Sur la figure 6, les deux tôles sont des tôles dépourvues d'éléments d'ancrage 1, d'épaisseurs uniformes et, avantageusement, identiques. Dans d'autres modes de réalisation, les tôles adjacentes à souder pourraient, cependant, avoir des épaisseurs différentes.

Ainsi, comme dans le mode de réalisation illustré sur la figure 4, une latte métallique 11 est, sur les figures 5 et 6, disposée contre les faces arrière de deux tôles adjacentes (notées 1 et 12 sur la figure 5 et notées 1 sur la figure 6), au niveau de la zone à souder. Le rail 8 est ensuite mis en simple appui contre la latte 11, sans être fixé mécaniquement à celle-ci. Ainsi, il n'y a pas de soudure ou une autre fixation rendant le rail 8 solidaire mécaniquement de la latte 11. La latte 11 et le rail 8 sont simplement mis en contact.

Puis, la soudure des tôles les unes aux autres est réalisée. Ainsi, un cordon de soudure 9 est formé entre les deux tôles adjacentes (notées 1 et 12 sur la figure 5 et notées 1 sur la figure 6), par fusion non seulement d'une partie de chacune des tôles (notées 1 et 12 sur la figure 5 et notées 1 sur la figure 6), mais aussi d'une partie de la latte métallique 11. L'opération de soudure rend alors la latte métallique 11 solidaire des deux tôles contre lesquelles elle a été placée. Il s'agit également ici d'une soudure bout à bout pleinement pénétrée, dans la mesure où il y a une fusion sur toute l'épaisseur des tôles adjacentes.

## Revendications

1. Procédé de réalisation d'un cuvelage pour piscine, bâche ou enceinte de confinement, **caractérisé en ce qu'**il comporte :
- le montage d'une série de tôles adjacentes incluant au moins :
a) la fixation d'une tôle monolithique (2, 2a, 2b) à au moins une plaque d'ancrage (3, 3a, 3b) disposée en regard, la tôle monolithique (2, 2a, 2b) étant partiellement délardée de manière à former une partie amincie (c) pour permettre, dans sa partie amincie (c), sa soudure avec au moins une tôle dépourvue d'éléments d'ancrage (1) et, dans sa partie non amincie (b), la fixation mécanique de ladite tôle monolithique (2, 2a, 2b) à la plaque d'ancrage (3, 3a, 3b),
b) et la mise en place d'un rail (8) délimitant avec les tôles adjacentes (1, 2, 2a, 2b) et au droit de la zone à souder, un espace de contrôle (10) du cordon de soudure (9),
- et la soudure des tôles (1, 2, 2a, 2b) les unes aux autres pour former une partie d'une surface du cuvelage en réalisant un cordon de soudure (9), ladite soudure étant une soudure bout à bout pleinement pénétrée.

2. Procédé selon la revendication 1, **caractérisé en ce que** la tôle dépourvue d'éléments d'ancrage (1) présente une épaisseur uniforme, égale à l'épaisseur de la partie amincie (c) de la tôle monolithique (2, 2a, 2b).

3. Procédé selon l'une des revendications 1 et 2, **caractérisé en ce que** la tôle dépourvue d'éléments d'ancrage (1) est disposée entre deux tôles monolithiques (2, 2a, 2b).

4. Procédé selon l'une quelconque des revendications 1 à 3, **caractérisé en ce que** le montage d'une série de tôles adjacentes (1, 2, 2a, 2b) comporte une opération de découpe de la tôle dépourvue d'éléments d'ancrage (1), pour ajuster ses dimensions à l'espace nécessaire pour sa mise en place, ladite mise en place de la tôle dépourvue d'élément d'ancrage (1) étant réalisée avant l'opération de soudure.

5. Procédé selon l'une quelconque des revendications 1 à 4, **caractérisé en ce que** la tôle monolithique (2, 2a, 2b) est fixée à plusieurs plaques d'ancrage (3, 3a, 3b).

6. Procédé selon la revendication 5, **caractérisé en ce que** la tôle monolithique (2, 2a, 2b) est fixée à plusieurs plaques d'ancrages (3, 3a, 3b) alignées selon un axe de direction parallèle à l'axe longitudinal (I) de la tôle monolithique (2, 2a, 2b).

7. Procédé selon l'une quelconque des revendications 1 à 6, **caractérisé en ce que** la partie non amincie (b) de la tôle monolithique (2, 2a, 2b) comporte au moins un élément d'ancrage (4, 4a, 4b) rendu solidaire d'une première face (5, 5a, 5b) de la plaque d'ancrage (3, 3a, 3b).

8. Procédé selon la revendication 7, **caractérisé en ce que** la plaque d'ancrage (3, 3a, 3b) comporte une seconde face (6, 6a, 6b) munie d'éléments de fixation (7, 7a, 7b) en saillie pour visser la plaque d'ancrage (3, 3a, 3b) à une paroi en béton.

9. Procédé selon l'une des revendications 1 à 8, **caractérisé en ce que** la soudure d'au moins deux tôles adjacentes est réalisée au moyen d'une latte métallique (11) préalablement disposée au niveau de la zone à souder, contre les faces arrière des deux tôles adjacentes (1, 2, 2a, 2b), le rail (8) étant placé en appui sans être mécaniquement solidaire contre ladite latte métallique (11).

## Patentansprüche

1. Verfahren zur Herstellung einer Auskleidung für ein Schwimmbecken, ein Wasserreservoir oder einen Schutzbehälter, **dadurch gekennzeichnet, dass** es umfasst:
- die Montage einer Reihe angrenzender Bleche, die mindestens umfasst:
a) die Befestigung eines monolithischen Blechs (2, 2a, 2b) an mindestens einer gegenüber angeordneten Verankerungsplatte (3, 3a, 3b), wobei das monolithische Blech (2, 2a, 2b) teilweise abgeschrägt ist, um seinen dünneren Bereich(c) zu bilden, um in seinem dünneren Bereich (c) sein Verschweißen mit mindestens einem Blech zu erlauben, das keine Befestigungselemente (1) aufweist, und in seinem nicht dünner vorgesehenen Bereich (b) die mechanische Befestigung des genannten monolithischen Blechs (2, 2a, 2b) an der Verankerungsplatte (3, 3a, 3b) zu erlauben,
b) sowie das Vorsehen einer Schiene (8), die mit den angrenzenden Blechen (1, 2, 2a, 2b) und in Höhe des zu schweißenden Bereichs einen Kontrollzwischenraum (10) für die Schweißnaht (9) bildet,
- das Verschweißen der Bleche (1, 2, 2a, 2b) miteinander, um einen Teil einer Oberfläche der Auskleidung zu bilden, indem eine Schweißnaht (9) hergestellt wird, welche Schweißnaht eine vollkommen durchdrungene Stumpfschweißnaht ist.

2. Verfahren nach Anspruch 1, **dadurch gekennzeichnet, dass** das Blech, das keine Verankerungselemente (1) hat, eine homogene Dicke aufweist, die gleich der Dicke des dünneren Bereichs (c) des monolithischen Blechs (2, 2a, 2b) ist.

3. Verfahren nach einem der Ansprüche 1 und 2, **dadurch gekennzeichnet, dass** das Blech, das keine Verankerungselemente (1) aufweist, zwischen zwei monolithischen Blechen (2, 2a, 2b) angeordnet ist.

4. Verfahren nach einem der Ansprüche 1 bis 3, **dadurch gekennzeichnet, dass** die Montage einer Reihe angrenzender Bleche (1, 2, 2a, 2b) einen Zuschnittschritt des Blechs umfasst, das keine Befestigungselemente (1) aufweist, um dessen Abmessungen an den für seinen Einbau nötigen Platz anzupassen, welcher Einbau des Blechs ohne Befestigungselemente (1) vor dem Schweißvorgang erfolgt.

5. Verfahren nach einem der Ansprüche 1 bis 4, **dadurch gekennzeichnet, dass** das monolithische Blech (2, 2a, 2b) an mehreren Verankerungsplatten (3, 3a, 3b) befestigt ist.

6. Verfahren nach Anspruch 5, **dadurch gekennzeichnet, dass** das monolithische Blech (2, 2a, 2b) an mehreren Verankerungsplatten (3, 3a, 3b) befestigt ist, die an einer zur Längsachse (I) des monolithischen Blechs (2, 2a, 2b) parallelen Richtungsachse ausgerichtet sind.

7. Verfahren nach einem der Ansprüche 1 bis 6, **dadurch gekennzeichnet, dass** der nicht dünner vorgesehene Bereich (b) des monolithischen Blechs (2, 2a, 2b) mindestens ein Verankerungselement (4, 4a, 4b) umfasst, das mit einer ersten Seite (5, 5a, 5b) der Verankerungsplatte (3, 3a, 3b) fest verbunden ist.

8. Verfahren nach Anspruch 7, **dadurch gekennzeichnet, dass** die Verankerungsplatte (3, 3a, 3b) eine zweite Seite (6, 6a, 6b) umfasst, die mit herausragenden Befestigungselementen (7, 7a, 7b) versehen ist, zur Verschraubung der Verankerungsplatte (3, 3a, 3b) mit einer Betonwand.

9. Verfahren nach einem der Ansprüche 1 bis 8, **dadurch gekennzeichnet, dass** das Verschweißen mindestens zweier angrenzender Bleche mittels einer Metallleiste (11) erfolgt, die vorab in dem zu schweißenden Bereich vorgesehen wurde, an der Rückseite beider angrenzender Bleche (1, 2, 2a, 2b), wobei die Schiene (8) aufliegend platziert wird, ohne mechanisch fest mit der genannten Metallleiste (11) verbunden zu sein.

## Claims

1. Method for making a casing for a pool, a tarpaulin or a containment enclosure, **characterised in that** it comprises:
- assembly of a series of adjacent sheets including at least:
a) fixing of a monolithic sheet (2, 2a, 2b) to at least one anchoring plate (3, 3a, 3b) arranged facing the latter, the monolithic sheet (2, 2a, 2b) being partially decreased in thickness so as to form a thinned part (c) so that, in its thinned part (c), it can be welded with at least one sheet devoid of anchoring parts (1) and, in its non-thinned part (b), said monolithic sheet (2, 2a, 2b) can be mechanically fixed to the anchoring plate (3, 3a, 3b),
b) and placing of a rail (8) demarcating, with the adjacent sheets (1, 2, 2a, 2b) and facing the area to be welded, an inspection space (10) of the welding seam (9),
- and welding of the sheets (1, 2, 2a, 2b) to one another to form a part of a surface of the casing by making a welding seam (9), said weld being a full penetration butt weld.

2. Method according to claim 1, **characterised in that** the sheet devoid of anchoring parts (1) presents a uniform thickness, equal to the thickness of the thinned part (c) of the monolithic sheet (2, 2a, 2b).

3. Method according to one of claims 1 and 2, **characterised in that** the sheet devoid of anchoring parts (1) is arranged between two monolithic sheets (2, 2a, 2b).

4. Method according to any one of claims 1 to 3, **characterised in that** assembly of a series of adjacent sheets (1, 2, 2a, 2b) comprises a cutting operation of the sheet devoid of anchoring parts (1), to adjust its dimensions to the space required for placing the latter, said placing of the sheet devoid of anchoring parts (1) being performed before the welding operation.

5. Method according to any one of claims 1 to 4, **characterised in that** the monolithic sheet (2, 2a, 2b) is fixed to several anchoring plates (3, 3a, 3b).

6. Method according to claim 5, **characterised in that** the monolithic sheet (2, 2a, 2b) is fixed to several anchoring plates (3, 3a, 3b) aligned according to an axis of direction parallel to the longitudinal axis (I) of the monolithic sheet (2, 2a, 2b).

7. Method according to any one of claims 1 to 6, **characterised in that** the non-thinned part (b) of the monolithic sheet (2, 2a, 2b) comprises at least one anchoring part (4, 4a, 4b) securedly attached to a first face (5, 5a, 5b) of the anchoring plate (3, 3a, 3b).

8. Method according to claim 7, **characterised in that** the anchoring plate (3, 3a, 3b) comprises a second face (6, 6a, 6b) provided with salient fixing parts (7, 7a, 7b) to screw the anchoring plate (3, 3a, 3b) to a concrete wall.

9. Method according to any one of claims 1 to 8, **characterised in that** the weld of at least two adjacent sheets is performed by means of a metal lath (11) placed beforehand in the area to be welded, against the rear faces of the two adjacent sheets (1, 2, 2a, 2b), the rail (8) being placed pressing without being mechanically fixed against said metal lath (11).
